(19) Europäisches Patentamt
European Patent Office
Office européen des brevets

(11) **EP 3 814 728 B1**

(12) **EUROPEAN PATENT SPECIFICATION**

(45) Date of publication and mention
of the grant of the patent:
**16.08.2023 Bulletin 2023/33**

(21) Application number: **19755432.2**

(22) Date of filing: **28.06.2019**

(51) International Patent Classification (IPC):
*G01F 23/26* (2022.01)    *F27D 21/00* (2006.01)
*F27B 3/08* (2006.01)

(52) Cooperative Patent Classification (CPC):
**G01F 23/261; F27B 3/085; F27D 21/0028**

(86) International application number:
**PCT/IB2019/055501**

(87) International publication number:
**WO 2020/003230 (02.01.2020 Gazette 2020/01)**

(54) **A DETECTION SYSTEM FOR DETECTING THE LEVEL OF METAL IN A MELTING FURNACE**

DETEKTIONSSYSTEM ZUR BESTIMMUNG DES METALLNIVEAUS IN EINEM SCHMELZOFEN

SYSTÈME DE DÉTECTION POUR DÉTECTER LE NIVEAU DE MÉTAL DANS UN FOUR DE FUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2018 IT 201800006804**

(43) Date of publication of application:
**05.05.2021 Bulletin 2021/18**

(73) Proprietor: **Danieli & C. Officine Meccaniche S.p.A.
33042 Buttrio (IT)**

(72) Inventors:
• **PETRONIO, Marco
34074 Monfalcone (IT)**
• **DELLA NEGRA, Angelico
33040 Povoletto (IT)**
• **CODUTTI, Andrea
33030 Moruzzo (IT)**

(74) Representative: **Cinquantini, Bruno et al
Notarbartolo & Gervasi S.p.A.
Viale Achille Papa, 30
20149 Milano (IT)**

(56) References cited:
CN-A- 1 048 750          GB-A- 1 174 095
JP-A- S52 117 833        US-A- 3 378 620
US-A- 3 409 726          US-A- 5 138 629
US-A1- 2005 046 419

**Description**

Background of the invention

The present invention belongs to the field of metal melting, in particular to the field of steel melting by means of an electric arc furnace with alternating current electrodes.

Alternatively, the system can be applied to ladle furnaces, Vacuum Arc Degasing furnaces.

State of the art

Electric arc furnaces are used, among other systems, for melting steel, also called EAF for short, provided with electrodes and in which the metal scrap is generally inserted with intermittent feeding operations by means of, for example, baskets or continuous feeding by means of conveyor belts. It is a well-known technology, which is very common in this sector of steel technology. A precise and continuous knowledge of the level of the molten bath in such furnaces at all times of the production cycle is important in order to optimally manage the process, the addition of additives and the melting progress. Furthermore, amongst other things, a knowledge of such parameter allows the lances, in particular the supersonic oxygen lance (often present in melting furnaces) and the sampling lance, to be arranged automatically, or not, in a vertical position, at a correct distance with respect to the level of the molten bath, and also allows to distinguish more clearly the zone occupied by the steel and the zone occupied, instead, by the slag during the sampling step.

One difficulty encountered and desired to be overcome in this type of furnace involves knowing whether the loaded scrap, amassed in the melting shell, has been sufficiently melted by the burners and by the electric arc, in order to proceed with the successive steps of managing the auxiliaries of the furnace, i.e. the injection of oxygen and the post combustion. Furthermore, with a knowledge of the level of the molten bath, it is possible to have an estimate, in real time, of the efficiency with which the loaded scrap melts and becomes liquid steel during the melting process.

US 3.378.620 A discloses an apparatus for determining the scrap charge configuration during melting of the charge.

Furthermore, the measurement can also be used to indirectly monitor the consumption of the refractory materials constituting the furnace.

When searching for solutions to this problem of detecting the molten metal, one important physical aspect, which needs to be considered, is the shielding effect of the molten bath with respect to the magnetic field generated by the three-phase electrodes through which the electric currents flows, which are needed to implement the melting and refining steps. In the past, this problem has made it extremely difficult to find solutions giving precise and efficient measurements.

Devices are known for detecting the level of steel in a container and, possibly, in an arc furnace. For example, EP0115258 discloses a device for detecting the level in melting shells, which are almost empty and in the presence of little steel. EP0419104 discloses a device for detecting the level of steel in a mold for continuous casting. In both cases, they are solutions based on the concept of having one or more transmitting coils with alternating current and one or more receiving coils arranged inside the container, the level of steel of which is desired to be measured. Since steel is a conductive material with the function of shielding the electric signal emitted by the transmitting coil, when the height of the level varies, the signal received by the receiving coil also varies. Thus, it is possible to estimate the level signal, since the signal received will be higher when the liquid steel does not shield the coil.

However, this system of detecting the level of the molten steel is ineffective in an electric arc furnace, which works in alternating current, because the magnetic field generated by the current which flows through the electrodes and the arc, closing the electric circuit in the liquid bath, also induces an induced electromotive force in the receiving coils. Such signal creates a disturbance in these molten bath level-measuring systems, introducing errors into the measurement.

Thus, such solutions do not adequately meet the needs for simplicity, precision and reliability expected in the steel sector.

Therefore, the need is felt to produce detectors of the level of the molten steel bath, which contribute to a cost-effective melting process and which are reliable and precise in a melting furnace of various type.

Summary of the invention

These aforesaid objects, in addition to other objects which will become clearer in the light of the following description, are achieved by means of a system for detecting a level of a molten bath or non-molten scrap for a melting furnace according to claim 1.

One important advantage of the claimed invention is the simplification of the architecture of the measurement system, since the transmitting coils are eliminated because the magnetic field, generated by the current circulating in the electric arcs and in the electrodes of the furnace and closing in the liquid bath, is exploited, acting as a "source" of the signal received by the receiving coils.

The present invention also applies to any type of process, in which electrodes are used with alternating current to perform operations with liquid steel.

In particular, conveniently, the invention can also be used to find out the level of the liquid steel in the Ladle Furnace, where the liquid steel undergoes refining operations, for example in Vacuum Arc Degasing type processes.

One first embodiment of the system of the invention comprises all the electromagnetic receiving coils configured to be arranged on only one side of the melting furnace with respect to any diametrical vertical section plane of the melting furnace.

In one variant, each electromagnetic receiving coil is configured to be arranged only along one respective arc of circumference of the periphery or perimeter of the melting furnace, said arc of circumference facing a first electrode and a second electrode, forming the electric circuit, and being opposite the half-circumference of said perimeter facing a third electrode. Thus, the coil is arranged on the side diametrically opposite the third electrode.

In other words, the electromagnetic receiving coils are arranged only along one cylindrical side surface portion of the periphery of the melting furnace, said cylindrical side surface portion facing a first electrode and a second electrode, and arranged on the side diametrically opposite the third electrode.

Preferably, the electromagnetic receiving coils are at least three in number and configured to be arranged aligned along the vertical direction.

A second embodiment comprises more than three electromagnetic receiving coils. At least two of these electromagnetic receiving coils are arranged in different points, along the periphery of the furnace, on one same plane which is higher than the maximum level of the molten metal bath, while the remaining electromagnetic receiving coils are placed at different heights along the vertical direction at lower levels than said maximum level.

One variant of the invention provides that the electromagnetic receiving coils are configured to be arranged close to an outer surface of the furnace, in particular on the outer wall of the furnace, for example in a housing produced on said outer wall, thus, externally to the layer of refractory material provided inside the furnace. Preferably, in the various embodiments, the electromagnetic receiving coils are substantially rectangular, for example with rounded corners, and configured to be arranged with the smaller side of the rectangle in a vertical direction. Dependent claims 2-10 describe particular embodiments of the invention.

## Brief description of the figures

Objects and advantages of the system for measuring the level of the steel bath of the present invention will become clear from the following detailed description of embodiments of the invention and from the appended drawings given purely by way of a non-limiting example, wherein:

Figure 1 shows a section on a vertical plane of an electric arc furnace with the operating diagram of the system of the invention;
Figure 2 is a sectional side view of an electric arc furnace to which the system according to the present invention, shown in transparency, is applied;
Figure 3 shows a graph with the trend of the signals, detected with a system according to the invention, as a function of the level of molten metal in a furnace;
Figure 4 shows a graph with the trend of the signals, detected with a system according to the invention, as a function of the level of molten metal in a furnace in a second mode of representation;
Figure 5 shows a schematic axonometric view of a receiving coil of the system according to the invention;
Figure 6 shows some graphs with the qualitative trend of the magnetic field detected by the various receiving coils of a system according to the invention for an arc furnace on which the system is installed, with a determined level of molten steel;
Figure 7 shows a graph with the qualitative trend of the magnetic field detected by a receiving coil of a system according to the invention for a furnace on which the system is installed, with a determined level of molten steel and the presence of non-molten scrap;
Figure 8 shows a possible arrangement of the receiving coils of a system according to the invention in an arc furnace seen in section on a horizontal plane;
Figure 9 shows a different possible arrangement of the receiving coils of a system according to the invention in an arc furnace seen in section on a horizontal plane;
Figure 10 shows two possible alternative arrangements A and B of the receiving coils of a system according to the invention in an arc furnace seen in section on a horizontal plane.

The same numbers and the same letters of reference in the figures identify the same elements or components.

## Detailed description of preferred embodiments of the invention

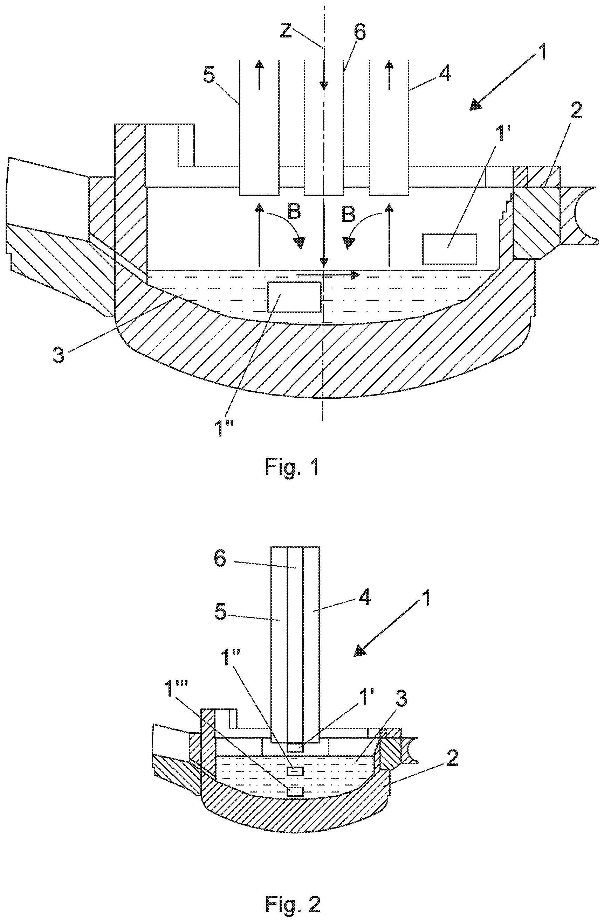

With reference to the figures, a system or device for detecting the level of molten metal when in operation, installed in an electric arc furnace 2 containing a bath 3 of molten steel, is described below and indicated globally with reference 1. The detection system 1 comprises one or two receiving coils 1', 1" as in fig. 1, or three receiving coils 1', 1", 1‴ as shown in other figures. Furthermore, it is possible to realize the system for detecting the level of molten metal with more than three receiving coils.

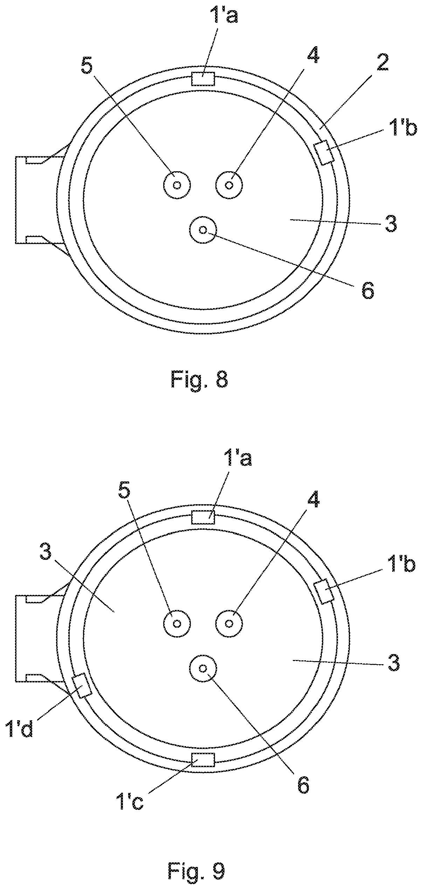

In all configurations, the receiving coils are fixed to the outer wall of the furnace 2. The arrangement of the receiving coils on the outer wall differs according to the embodiments of the invention. The coils of the detection system can be arranged along the periphery or perimeter of the furnace, generally along lines representing meridians, and consequently at different heights, or along ideal parallels, for example as shown schematically in figures 8 and 9. In particular, this arrangement makes it possible to detect non-molten scrap in several points of the internal periphery of the furnace. It is also possible to arrange the receiving coils according to a combination of arrangements along one or more vertical lines and of arrangement along one or more horizontal lines.

In this description, the horizontal and vertical orientation is defined with respect to the position of the furnace 2 with the filling opening facing upwards. For example, the melting furnace 2 defines, i.e. determines, a vertical direction when the furnace is arranged with the opening in the highest position thereof.

Another possible arrangement of the receiving coils is the arrangement in which three receiving coils 1', 1", 1‴ are all arranged along one single vertical meridian line of the furnace, in order to completely detect the level along the whole height of the part of the furnace 2 occupied by the molten metal 3, as shown in figure 2.

Another possible arrangement, alternative to the previous ones, is the arrangement in which several receiving coils are arranged vertically along several meridian lines of the surface of the arc furnace.

Thus, from the above explanation, it is clear to a person skilled in the art that, although the embodiment described here, for simplicity, is principally the embodiment in which the detection system comprises three coils 1', 1", 1‴ arranged vertically, i.e. along one same vertical direction, depending on the needs of detection, it is possible to compose the detection system of the invention with more than three coils, since there is no limit, other than financial and dimensional, to the number of receiving coils. Clearly, the greater the number of receiving coils, the more precise the measurement of the level of molten steel can be.

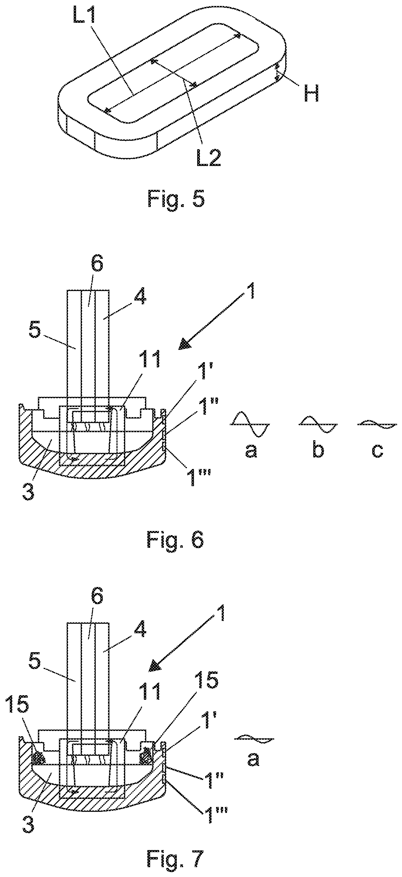

The more general basic diagram of the detection system of the invention is illustrated in fig. 1, wherein the three-phase electrodes 4, 5, 6 are part of an electric circuit with a current flowing through the electrode 6 in a first direction, while the alternating current flows through the other two electrodes 4, 5 in a second direction opposite the first, and the molten steel bath 3 completes the electric circuit. The trend of this electric circuit is indicated with reference 11 in figures 6, 7. If the arc furnace also had only two electrodes or more than three, for example four, the electric circuit would be formed in a similar manner. The three-phase alternating current, which flows through the electric circuit 11, as is well known, generates an electromagnetic field. Such electromagnetic field can be detected by the receiving coils 1', 1", 1‴ of the detection system 1 fixed to the inside of the wall of refractory material of the furnace 2.

The operating principle of the system for detecting a level of the molten bath of the invention will now be described. When a receiving coil, arranged for example on the outer wall of the furnace, is higher than the level of the steel bath, like the coil 1' in the system shown in figure 2, the variation in time of the magnetic flow produced by the alternating current of the electrode produces a voltage signal, which can be detected by means of a voltmeter or an ammeter, conveniently connected to the ends of the receiving coil. If the voltage signal of any receiving coil is a signal which can be detected with intensity, then the level of the molten steel is lower than the plane on which the coil is arranged. On the contrary, if the voltage signal of that same coil is particularly low, then the level of the molten steel is higher than the receiving coil because the molten steel bath has a strong shielding power on the magnetic flow. This configuration is represented schematically in fig. 6 where, with the level of molten steel shown, the voltage curve "a" corresponds to the receiving coil 1', the voltage curve "b" corresponds to the receiving coil 1", and the voltage curve "c" corresponds to the receiving coil 1‴. Naturally, these are schematic, purely illustrative voltage curves, which illustrate the operating principle of the system of the invention.

The same also occurs when a receiving coil is arranged above the level of liquid steel, but it is covered by the non-molten metal scrap 15, because also said scrap has a shielding power. This configuration is represented schematically in fig. 7 where, with the level of molten steel shown and with the presence of scrap 15 above the level of the steel 3, the voltage curve "a" corresponds to the receiving coil 1'. Typically, with a working frequency of 50Hz the electromagnetic field is reduced by 95% to a depth of 250mm of molten steel.

With particular reference to the configurations of the device shown in figures 2, 3, 4, 6, 7, which have three receiving coils 1', 1", 1‴ each connected to a respective voltmeter, the detection system 1 can be made to work typically, but not exclusively, in three different modes.

Scrap Detection Operating Mode:

The upper coil 1' is always placed above the maximum level of liquid steel and thus said upper coil always detects a high voltage signal in module. Instead, if the upper coil 1' is shielded by the non-molten metal scrap, which can happen in a melting process wherein scrap is charged from the top, the upper coil 1' detects a low value signal, and therefore the detection system indicates the presence of non-molten scrap above the bath, said scrap being placed in front of the coil, i.e. it intersects the substantially horizontal plane on which the coil is positioned.

Moreover, if there are several upper coils 1'a, 1'b, 1'c, 1'd arranged above the maximum level of the liquid steel bath in different points along the periphery of the furnace, as shown by figures 8 and 9, it is possible to verify, in several points of the molten bath, the presence of non-molten scrap inside the furnace.

When the scrap 15 is completely melted, the signal received by the upper coil 1', or by the several upper coils 1'a, 1'b, 1'c, 1'd, is of a high value.

In the variant in Figure 8, two upper receiving coils 1'a, 1'b are provided, arranged along the periphery of the furnace 2, in particular on the outer wall of the furnace, for example in a housing obtained on the outer wall. Preferably, said upper receiving coils 1'a, 1'b are positioned on one same substantially horizontal plane. Instead, in the variant in Figure 9, four upper receiving coils 1'a, 1'b, 1'c, 1'd are provided, arranged along the periphery of the furnace 2, in particular on the outer wall of the furnace, for example in a housing obtained on the outer wall. Preferably, said upper receiving coils 1'a, 1'b, 1'c, 1'd are positioned on one same substantially horizontal plane. Optionally, these four upper receiving coils are arranged two by two symmetrically with respect to a diametrical vertical section plane of the melting furnace 2.

First detection mode for detecting liquid steel level:

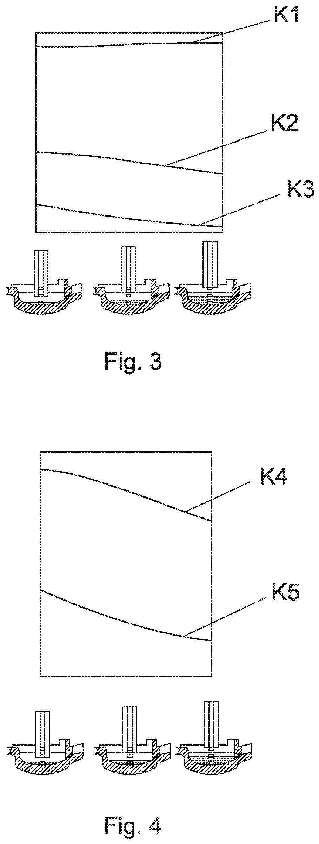

In order to find out the liquid steel level 3, the voltage (or current) received from the receiving coil 1', 1" or 1‴ is compared with an electromagnetic model, the current passing through the electrodes 4, 5, 6 being known, because it is a value which can be acquired through appropriate measurements. Furthermore, when the scrap 15 is completely melted and there is no accumulation of scrap above the bath, the trend of such signals is shown in the graph in fig. 3 (K1, K2, K3).

It is also possible to use the signal of the upper coil 1' as a "signal of reference", dividing the signal received from the other coils 1", 1‴, in an intermediate position and in a lower position respectively, for said signal of reference, thus obtaining a dimensionless value, independent from the current flowing through the electrodes, representing the height of the level of molten steel 3. The trend of such signals is shown in the graph in fig. 4 (K4, K5).

Second detection mode for detecting liquid steel level:

Using three coils 1', 1", 1‴ arranged in different positions along the vertical it is possible to cover the whole variation range of the level of liquid steel. The intermediate receiving coil 1" is more sensitive for medium high bath levels, while the lower receiving coil 1‴ is more sensitive for medium low bath levels. This trend of such signals is also shown in the graph in fig. 3.

Thus, the detection system 1 detects the electromagnetic field produced during operation of the arc furnace in the presence of the molten metal bath and/or scrap intended for melting.

With particular reference to fig. 5, a receiving coil is schematically shown with a number N of turns. Preferably, but not exclusively, the shape of the coil is rectangular, whose dimension of the larger side is L1 and whose dimension of the smaller side is L2 and normally the receiving coils are arranged on the wall of the furnace with the smaller side L2 in a vertical direction.

Alternatively, the coil can have an elliptic shape or another suitable elongated shape.

The side L2 of the coil intended to be arranged vertically is small enough to increase the sensitivity of the coil and contain the dimensions. However, the product N*L1*L2 must be high enough for the voltage V to be detectable.

In fact, the voltage at the ends of the winding is calculated with the following formula:

$$V(t)=N*L1*L2*dB/dt$$

where B is the electromagnetic field component orthogonal to the surface of the sensor, i.e. of the receiving coil, and the voltage module is thus:

$$V=N*L1*L2*2\pi*f*B,$$

where f is the frequency of the electric current circulating in the electric circuit 11.

Furthermore, if the currents and voltages of the electrodes (module and phase) are known, the knowledge of the phase of current and of voltage received also provides information on the level of voltage received. In fact, by varying the level of liquid steel or the presence, or not, of scrap, the impedance of the coil varies in module and phase.

Thus, the voltage is proportionate to the number of turns, it is proportionate to the area defined by the coil (which can be calculated by multiplying L1*L2) and it is also proportionate to the frequency f.

An electromagnetic model was created by means of mathematical simulations, said model allowing, also with a detection system 1 composed of only three coils, a precise detection of the height of the molten bath, also in the intermediate positions between two adjacent coils. A graph, which shows the intensity of the magnetic field suffered by each of the three coils 1', 1", 1‴ as a function of the distance from the surface of the molten bath, and completed thanks to extrapolations in the sections between the adjacent coils, can be used for a precise detection of the height of the molten steel bath.

The receiving coils are designed with support and winding wires capable of resisting the high temperature, and are possibly provided with a cooling system, preferably in air.

Magnetic flow concentrators can also be used to produce the coils, in order to obtain the desired received signal.

Preferably, but not exclusively, the wire constituting the turns of the receiving coils is made of nickel-plated copper, with mica insulation and fiberglass protection. The turns are fixed to a support structure made of mica-based materials or similar.

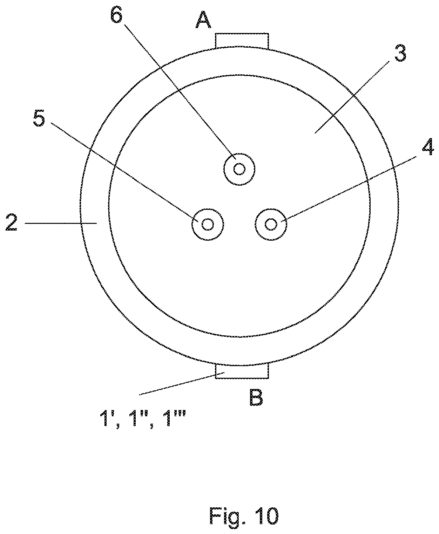

In an alternating current furnace, in particular a three-phase arc furnace (Figure 10), the optimum and more effective position of the detection system for detecting the magnetic field, generated by a circulation of electric current in the electric circuit formed by at least two of the three electrodes 4, 5, 6, by at least one electric arc and by the molten bath 3 contained in the melting furnace 2, is the position in which all receiving coils 1', 1", 1''' are along a substantially vertical line, on the outer surface of the furnace 2 along respective arcs of circumference, which are in front of two of the three electrodes 4, 5, 6, in the position shown with B in fig. 10. The receiving coils are arranged in such preferred position B, in the zone in front of the two electrodes 4, 5. Such zone is conventionally defined "cold point" because it is the zone furthest from the electric arc, i.e. where the non-molten scrap mostly accumulates. The position B is the best position possible as it is the one closest to the electrodes 4 and 5, and it is capable of detecting a magnetic field with a component orthogonal to the receiving coils. Instead, the position indicated in figure 10 with A is possibly a zone that must be avoided because it is in the shadow of the third electrode 6 and, if the receiving coils were placed in such position A, a lower force signal would be detected. Again, with reference to Fig. 7, the electrode 6 produces an electromagnetic field, which is purely tangent, both in point B and in point A, according to the law of Biot Savart. For the purposes of the signal received, i.e. of the voltage induced at the ends of the receiving coil, only the electromagnetic field counts with a direction orthogonal to the coil, thus the electrode 6 always gives a zero contribution to the detection.

Advantageously, the coils are inserted inside the carpentry of the melting furnace, but however on the outer surface, in a zone adequately isolated from the heat. The detection system according to the claimed invention is provided with a cooling device, preferably with air, which is incorporated in the coil to reduce the dimensions thereof. Alternatively, in an embodiment not part of the claimed invention, the detection system may also be provided with forced cooling means, to ensure an appropriate operating temperature for the components of the detection system. Preferably, the receiving coils are arranged inside the bricks constituting the refractory wall of the furnace, since said bricks do not shield the electromagnetic field produced in the arc furnace.

Alternatively, the receiving coils can be arranged externally to the refractory wall, producing an opening on the melting shell with dimensions equal to at least the dimensions of the respective receiving coil. In this last case, the efficacy of the receiving coil is reduced since the magnetic field tends to decrease more quickly inside the opening. In general, to ensure the correct operation of a receiving coil, said coil must not have metal surfaces in front of it, which can shield the magnetic field used to detect the level of molten steel.

A typical melting cycle in an arc furnace, for which the use of a method for detecting the level of molten metal realized with the system of the invention is particularly useful, will now be described as a non-limiting example.

During a melting process, several baskets filled with scrap are loaded into the furnace in sequence. When the last basket of scrap has been loaded, the next step is the refining, wherein the scrap is melted and the bath is flat. In this moment, it is possible to measure the level of the molten metal by means of the Second mode of detecting the level of the molten bath using the ratios between the signal received in each of the coils 1", 1''', which are in an intermediate position and lower position, and the signal received from the upper coil 1'.

If there is non-molten scrap above the level of the molten bath, the first level detection mode is used, i.e. the voltages received from the coils are compared with the electromagnetic model, the current flowing through the electrodes being known. Furthermore, after each basket of scrap loaded, the situation can arise in which not all of the scrap is melted and is still in a partly solid state, and it is necessary to detect the level of the bath. Due to the system of the invention, also in such situation it is possible to measure the height of the molten bath and the height of the layer of scrap.

Moreover, another typical steel melting process is a continuous loading process, in which the scrap is not charged from the top, but enters through a special side door of the arc furnace. Similarly, in this case too, advantageously, the detection system can be used to measure the level of liquid steel and to detect non-molten scrap.

## Claims

1. A detection system for detecting a level of a molten bath (3) or non-molten scrap (15) for a melting furnace (2), defining a vertical direction Z, comprising two or more electrodes (4, 5, 6), a plurality of electromagnetic receiving coils (1', 1", 1''') configured to detect only one electromagnetic field generated by a circulation of electric current in an electric circuit (11) consisting of at least two of the two or more electrodes (4, 5, 6), at least one electric arc and the molten bath (3) contained in said melting furnace (2), wherein the plurality of electromagnetic receiving coils (1', 1", 1''') are arranged at different heights along the vertical direction Z above a bottom of the furnace, **characterized in that** an upper coil (1') of the plurality of electromagnetic receiving coils (1', 1", 1''') is always placed above a higher plane of maximum level of liquid steel, which the molten bath can reach in the furnace during melting operation, and **in that** the plurality of electromagnetic receiving coils (1', 1", 1''') are provided with a cooling device incorporated in the coils.

2. A detection system according to claim 1, wherein all of the electromagnetic receiving coils (1', 1", 1''') are configured to be arranged only on one side of the melting furnace (2) with respect to any diametrical vertical section plane of the melting furnace (2).

**3.** A detection system according to claim 2, wherein each electromagnetic receiving coil (1', 1", 1''') is configured to be arranged only in one respective arc of circumference of the periphery of the melting furnace (2), facing said at least two of the two or more electrodes (4, 5, 6) forming the electric circuit and being opposite the half-circumference of said periphery facing a third electrode.

**4.** A detection system according to one of the preceding claims, wherein the electromagnetic receiving coils are at least three in number (1', 1", 1''') and configured to be arranged aligned along the vertical direction.

**5.** A detection system according to claim 1, wherein there are provided more than three electromagnetic receiving coils (1', 1", 1''') and at least two (1'a, 1'b, 1'c, 1'd) of said electromagnetic receiving coils are arranged in different points along the periphery of the furnace (2), on one same plane which is higher than said maximum level, while the remaining electromagnetic receiving coils (1", 1''') are placed at different heights along the vertical direction, at lower levels than said maximum level.

**6.** A detection system according to one of the preceding claims, wherein the electromagnetic receiving coils (1', 1", 1''') are configured to be arranged close to an outer surface of the furnace.

**7.** A detection system according to one of the preceding claims, wherein the electromagnetic receiving coils (1', 1", 1''') are substantially rectangular in plan and configured to be arranged with the smaller side in a vertical direction.

**8.** An electric arc melting furnace (2) with alternating current comprising a detection system for detecting the level of the molten bath (3) according to one of the preceding claims.

**9.** A melting furnace of the "ladle furnace" type or the like, comprising a detection system for detecting the level of the molten bath (3) or non-molten scrap (15) according to one of the claims from 1 to 7.

**10.** A melting furnace according to claim 8 or 9, wherein there are provided at least three electromagnetic receiving coils (1', 1 ", 1 ''') arranged at different distances from a bottom of the melting furnace (2) along the vertical direction.

**Patentansprüche**

**1.** Detektionssystem zur Bestimmung eines Niveaus eines Schmelzbads (3) oder nicht geschmolzenen Schrotts (15) für einen Schmelzofen (2), der eine vertikale Richtung Z definiert, mit zwei oder mehr Elektroden (4, 5, 6), einer Vielzahl von elektromagnetischen Empfangsspulen (1', 1", 1'''), die so konfiguriert sind, dass sie nur ein elektromagnetisches Feld erfassen, das durch einen Stromfluss in einem elektrischen Schaltkreis (11) erzeugt wird, der aus mindestens zwei der zwei oder mehr Elektroden (4, 5, 6), mindestens einem Lichtbogen und dem in dem Schmelzofen (2) enthaltenen Schmelzbad (3) besteht, wobei die Vielzahl von elektromagnetischen Empfangsspulen (1', 1", 1''') in unterschiedlichen Höhen entlang der vertikalen Richtung Z über einem Boden des Ofens angeordnet sind, **dadurch gekennzeichnet, dass** eine obere Spule (1') der Vielzahl von elektromagnetischen Empfangsspulen (1', 1", 1''') immer über einer höheren Ebene des maximalen Niveaus des flüssigen Stahls angeordnet ist, welches das Schmelzbad im Ofen während des Schmelzbetriebs erreichen kann,
und dass die Vielzahl von elektromagnetischen Empfangsspulen (1', 1", 1''') mit einer in die Spulen integrierten Kühlvorrichtung versehen sind.

**2.** Detektionssystem nach Anspruch 1, wobei alle elektromagnetischen Empfangsspulen (1', 1", 1''') so konfiguriert sind, dass sie nur auf einer Seite des Schmelzofens (2) in Bezug auf eine diametrale vertikale Schnittebene des Schmelzofens (2) angeordnet sind.

**3.** Detektionssystem nach Anspruch 2, wobei jede elektromagnetische Empfangsspule (1', 1", 1''') so konfiguriert ist, dass sie nur in einem jeweiligen Bogen des Umfangs des Schmelzofens (2) angeordnet ist, wobei sie den mindestens zwei der zwei oder mehr Elektroden (4, 5, 6), die den Stromkreis bilden, zugewandt ist und dem halben Umfang des Umfangs gegenüberliegt, der einer dritten Elektrode zugewandt ist.

**4.** Detektionssystem nach einem der vorstehenden Ansprüche, wobei die elektromagnetischen Empfangsspulen mindestens drei an der Zahl (1', 1", 1''') sind und so konfiguriert sind, dass sie entlang der vertikalen Richtung ausgerichtet sind.

**5.** Detektionssystem nach Anspruch 1, wobei mehr als drei elektromagnetische Empfangsspulen (1', 1", 1''' ) vorgesehen sind und mindestens zwei (1'a, 1'b, 1'c, 1'd) der elektromagnetischen Empfangsspulen an verschiedenen Punkten entlang des Umfangs des Ofens (2) auf einer gleichen Ebene angeordnet sind, die höher als das maximale Niveau ist, während die verbleibenden elektromagnetischen Empfangsspulen (1", 1''') auf verschiedenen Höhen entlang der vertikalen Richtung auf niedrigeren Niveaus als dem maximalen Niveau angeordnet sind.

**6.** Detektionssystem nach einem der vorstehenden Ansprüche, wobei die elektromagnetischen Empfangsspulen (1', 1", 1‴) so konfiguriert sind, dass sie nahe an einer Außenfläche des Ofens angeordnet sind.

**7.** Detektionssystem nach einem der vorstehenden Ansprüche, wobei die elektromagnetischen Empfangsspulen (1', 1", 1‴) im Wesentlichen rechteckig im Grundriss sind und so konfiguriert sind, dass sie mit der kleineren Seite in einer vertikalen Richtung angeordnet sind.

**8.** Lichtbogenschmelzofen (2) mit Wechselstrom, umfassend ein Detektionssystem zur Bestimmung des Niveaus des Schmelzbades (3) nach einem der vorstehenden Ansprüche.

**9.** Schmelzofen vom Typ "Pfannenofen" oder dergleichen, umfassend ein Detektionssystem zur Bestimmung des Niveaus des Schmelzbades (3) oder des ungeschmolzenen Schrotts (15) nach einem der Ansprüche 1 bis 7.

**10.** Schmelzofen nach Anspruch 8 oder 9, wobei mindestens drei elektromagnetische Empfangsspulen (1', 1", 1‴) vorgesehen sind, die in unterschiedlichen Abständen von einem Boden des Schmelzofens (2) entlang der vertikalen Richtung angeordnet sind.

## Revendications

**1.** Système de détection pour détecter un niveau de bain fondu (3) ou de déchets non fondus (15) pour un four de fusion (2), définissant une direction verticale Z, comprenant deux ou plusieurs électrodes (4, 5, 6), une pluralité de bobines de réception électromagnétique (1', 1", 1‴) configurées pour détecter un seul champ électromagnétique généré par une circulation de courant électrique dans un circuit électrique (11) constitué d'au moins deux des deux ou plusieurs électrodes (4, 5, 6), au moins un arc électrique et le bain en fusion (3) contenu dans ledit four de fusion (2), dans lequel la pluralité de bobines de réception électromagnétique (1', 1", 1‴) sont disposées à différentes hauteurs le long de la direction verticale Z au-dessus d'un fond du four, **caractérisé en ce qu'**une bobine supérieure (1') de la pluralité de bobines de réception électromagnétique (1', 1", 1‴) est toujours placée au-dessus d'un plan supérieur du niveau maximal d'acier liquide que le bain en fusion peut atteindre dans le four au cours de l'opération de fonte, et **en ce que** la pluralité de bobines de réception électromagnétique (1', 1", 1‴) sont dotées d'un dispositif de refroidissement incorporé dans les bobines.

**2.** Système de détection selon la revendication 1, dans lequel toutes les bobines de réception électromagnétique (1', 1", 1‴) sont configurées pour être disposées d'un seul côté du four de fusion (2) par rapport à tout plan de section vertical diamétral du four de fusion (2).

**3.** Système de détection selon la revendication 2, dans lequel chaque bobine de réception électromagnétique (1', 1", 1‴) est configurée pour être disposée uniquement dans un arc de circonférence respectif de la périphérie du four de fusion (2), en face de ladite au moins deux des deux électrodes ou plus (4, 5, 6) formant le circuit électrique et à l'opposé de la demi-circonférence de ladite périphérie en face d'une troisième électrode.

**4.** Système de détection selon l'une des revendications précédentes, dans lequel les bobines de réception électromagnétique sont au moins trois (1', 1", 1‴) et sont configurées pour être alignées le long de la direction verticale.

**5.** Système de détection selon la revendication 1, dans lequel il y a plus de trois bobines de réception électromagnétique (1', 1", 1‴) et au moins deux (1'a, 1'b, 1'c, 1'd) desdites bobines de réception électromagnétique sont disposées en différents points le long de la périphérie du four (2), sur un même plan qui est plus haut que ledit niveau maximum, tandis que les bobines de réception électromagnétique restantes (1", 1‴) sont placées à différentes hauteurs le long de la direction verticale, à des niveaux plus bas que ledit niveau maximum.

**6.** Système de détection selon l'une quelconque des revendications précédentes, dans lequel les bobines de réception électromagnétique (1', 1", 1‴) sont configurées pour être disposées à proximité d'une surface extérieure du four.

**7.** Système de détection selon l'une des revendications précédentes, dans lequel les bobines de réception électromagnétique (1', 1", 1‴) sont sensiblement rectangulaires en plan et configurées pour être disposées avec le plus petit côté dans une direction verticale.

**8.** Four de fusion à arc électrique (2) à courant alternatif comprenant un système de détection du niveau du bain de fusion (3) selon l'une quelconque des revendications précédentes.

**9.** Four de fusion de type « four poche » ou analogue, comprenant un système de détection du niveau du bain de fusion (3) ou des déchets non fondus (15) selon l'une des revendications de 1 à 7.

**10.** Four de fusion selon la revendication 8 ou 9, dans lequel il y a au moins trois bobines de réception électromagnétique (1', 1", 1‴) disposées à différentes distances du fond du four de fusion (2) le long de la direction verticale.

Fig. 1

Fig. 2

K1

K2

K3

Fig. 3

K4

K5

Fig. 4

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3378620 A
- EP 0115258 A
- EP 0419104 A